(19) Europäisches Patentamt
European Patent Office
Office européen des brevets

(11) Veröffentlichungsnummer: **0 012 892**
**B1**

# (12) EUROPÄISCHE PATENTSCHRIFT

(45) Veröffentlichungstag der Patentschrift: **02.06.82**

(51) Int. Cl.³ **C 08 G 77/08**, C 08 G 77/14

(21) Anmeldenummer: **79104938.0**

(22) Anmeldetag: **05.12.79**

## (54) Verfahren zur Herstellung von siliciumfunktionellen Polyorganosiloxanen.

(30) Priorität: **23.12.78 DE 2855927**

(43) Veröffentlichungstag der Anmeldung: **09.07.80 Patentblatt 80/14**

(45) Bekanntmachung des Hinweises auf die Patenterteilung: **02.06.82 Patentblatt 82/22**

(84) Benannte Vertragsstaaten: **BE DE FR GB**

(56) Entgegenhaltungen:
**EP-A-00 003 285**
**DE-B-2 453 482**
**FR-A-2 303 040**
**GB-A-858 128**

(73) Patentinhaber: **BAYER AG, Zentralbereich Patente, Marken und Lizenzen, D-5090 Leverkusen 1, Bayerwerk (DE)**

(72) Erfinder: **de Montigny, Armand, Dr., Walter-Flex-Strasse 17, D-5090 Leverkusen 1 (DE)**
Erfinder: **Niederprüm, Hans, Dr., Hofstrasse 27, D-4019 Monheim (DE)**

**EP 0 012 892 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von siliciumfunktionellen Polyorganosiloxanen

Die vorliegende Erfindung betrifft die Herstellung von linearen bzw. verzweigten siliciumfunktionellen Polyorganosiloxanen durch sog. Äquilibrierung von Chlorsiloxanen in Gegenwart einer Kombination aus katalytischen Mengen von Salzen von fluorierten Organosulfonsäuren und einbasischen Carbonsäuren, wie z. B. Essigsäure oder Propionsäure.

Lineare und verzweigte siliciumfunktionelle Polyorganosiloxane, wie z. B. Siloxane mit endständigen Si-gebundenen Chloratomen oder Acetoxyresten sind Ausgangsprodukte für eine Vielzahl organopolysiloxan-haltiger Materialien, da sie sich zur Umsetzung mit reaktionsfähigen Wasserstoffatomen, wie sie z. B. in Alkoholen, Aminen und vielen weiteren Verbindungen vorliegen, eignen. So dienen sie u. a. zur Herstellung von Polyäther-Polysiloxan-Mischpolymeren, die durch ihre grenzflächenaktiven Eigenschaften weite technische Anwendung z. B. als Stabilisatoren zur Polyurethanschaumstoffherstellung gefunden haben, sowie anderer Blockmischpolymere. Die Versuche zur Herstellung von siliciumfunktionellen Polyorganosiloxanen konzentrierten sich bislang vor allem auf die Herstellung von chlorhaltigen Organopolysiloxanen entweder durch unvollständige Hydrolyse der Organochlorsilane (vgl. z. B. US-PS 2 381 366, DE-AS 1 174 509, DE-OS 2 345 923) oder durch Reaktion von Chlorsilanen mit vor allem cyclischen Siloxanen in Gegenwart von Katalysatoren wie z. B. $FeCl_3$ und/oder HCl (US-PS 2 421 653) oder Phosphinoxiden (US-PS 3 162 662). Auch quartäre Ammoniumsalze finden zur Ringöffnung von Cyclotrisiloxanen in Gegenwart von Chlorsilanen Verwendung, um zu Chlorsiloxanen zu gelangen (US-PS 3 162 662). Katalysatorgemische wie Halogenwasserstoff/protonensaurer Äquilibrierungskatalysator (DE-OS 2 453 482) oder Halogenwasserstoffe/peralkyliertes Säureamid (DE-OS 2 353 166) sind in neuerer Zeit im Zusammenhang mit der Umsetzung von Organochlorsilanen mit Polyorganosiloxanen beschrieben worden.

Die Verwendung von perfluorierten Alkansulfonsäuren oder deren Derivate zur Polymerisation von Siliconen, insgesondere von Silanen ist in der französischen Patentanmeldung Nr. 2 303 040 beschrieben. Das dort erwähnte Verfahren ist jedoch auf die Polymerisation von Silanen zu polymeren Verbindungen beschränkt. Eine Äquilibierungsreaktion wird mit den genannten Katalysatoren nicht durchgeführt. Gegenstand einer älteren europ. Patentanmeldung (Nr. 79100058.1) ist die Verwendung einer Kombination aus protonensauren Äquilibierungskatalysatoren (z. B. Perfluoralkansulfonsäuren) und einbasischen Carbonsäuren zur Äquilibierung von Siloxanen.

Gegenstand der vorliegenden Erfindung ist ein Verfahren zur Herstellung von linearen und verzweigten, äquilibierten gemischten acyloxyhaltigen und chlorhaltigen Organopolysiloxanen durch Umsetzung eines Chlorsilans der Formel

$$R_aR'_bSiCl_{(4-a-b)}$$

oder partiellen Hydrolysaten hiervon, wobei

a = 0, 1, 2 oder 3,
b = 0, 1, 2 oder 3 und
a + b höchstens 3 ist,

mit einem oder mehreren Organosiloxanen, die folgende Bausteine in gegebenenfalls wechselnder Anordnung aufweisen können,

$$[R_2R''-SiO_{1/2}]\ [RR''-SiO]\ [R''-SiO_{3/2}]\ [SiO_2]$$

wobei
R und R' unabhängig voneinander Wasserstoff, ein aliphatischer, aromatischer, gesättigter oder ungesättigter, gegebenenfalls halogen- oder cyansubstituierter einwertiger Kohlenwasserstoffrest mit bis zu 12 C-Atomen ist und
R'' Chlor oder Hydroxyl ist, oder die bei R und R' angegebene Bedeutung hat, in solchen Mengenverhältnissen, daß die Zahl aller Si—Cl-Gruppen stets die Zahl aller Si—OH-Gruppen übersteigt, durch
Reaktion in Gegenwart einer Kombination aus einem Äquilibrierungskatalysator und — bezogen auf die siliciumgebundenen Chloratome — der mindestens 1,1fachen molaren Menge an einbasischer Carbonsäure, insbesondere Essigsäure bei Temperaturen bis maximal 135°C, welches dadurch gekennzeichnet ist, daß als Äquilibrierungskatalysator ein Salz einer fluorierten Alkansulfonsäure verwendet wird.

Es wurde überraschenderweise gefunden, daß im Gegensatz zu Salzen der Schwefelsäure, die Salze der fluorierten Alkansulfonsäuren im obigen Prozeß ausgezeichnete Äquilibrierungskatalysatoren darstellen. Vorteilhaft bei dem Einsatz von Salzen der fluorierten Alkansulfonsäuren ist darüber hinaus die Tatsache, daß bei der Herstellung dieser Säure die Salze als Zwischenstufe anfallen, so daß

diese Katalysatoren einfacher herstellbar sind als die entsprechenden Säuren.

Bevorzugt werden Salze der Perfluoralkansulfonsäure

$R_FSO_3Me$,

wobei $R_F$ ein perfluorierter Alkylrest mit bis zu 12 C-Atomen ist, in Mengen von 0,05 bis 1,5 Gew.-%, bevorzugt 0,3—0,7 Gew.-%, eingesetzt. Als $R_F$-Rest können z. B. der $CF_3$-, der $C_4F_9$-, $C_8F_{17}$-Rest stehen. Die %-Angaben beziehen sich auf die vorliegenden Siliciumverbindungen.

Ebenfalls einsetzbar sind Salze nicht vollständig fluorierter Säuren wie z. B.

$C_4F_8HSO_3Me$.

Als Rest Me wird Kalium bevorzugt, es eignen sich jedoch auch Na, Ca- oder andere Metallionen.

Als Silane kommen in Frage: Trimethylchlorsilan, Dimethylvinylchlorsilan, Dimethylphenylchlorsilan, Chlorpropyldimethylchlorsilan, Chlormethyldimethylchlorsilan, Brommethyldimethylchlorsilan, Dimethyldichlorsilan, Methylvinyldichlorsilan, Methylphenyldichlorsilan, 3,3,3-Trifluorpropylmethyldichlorsilan, Diphenyldichlorsilan, Chlorpropylmethyldichlorsilan, Methyltrichlorsilan, Chlormethylmethyldichlorsilan, Brommethylmethyldichlorsilan, Methyltrichlorsilan, Chlormethyltrichlorsilan, Vinyltrichlorsilan, Phenyltrichlorsilan und Siliciumtetrachlorid.

Als Siloxane eignen sich bevorzugt die direkten Hydrolysate des Dimethyldichlorsilans, wie sie großtechnisch als Vorstufe zur Erzeugung der Cyclosiloxane anfallen, sowie die Cyclosiloxane:

$(RR'-SiO)_n$

mit n=3 bis 5, wobei R und R' die bereits genannte Bedeutung besitzen. In Frage kommen vor allem auch beliebige lineare und verzweigte Siloxane, deren Herstellung dem Fachmann geläufig ist. Diese Siloxane können ebenfalls siliciumfunktionelle wie Si—OH- oder Si—Cl-Gruppen oder auch seitenständige organofunktionelle Gruppen, wie Si-vinyl, $-Si-CH_2Cl$ usw. enthalten.

Das erfindungsgemäße Verfahren wird im allgemeinen so durchgeführt, daß man das Chlorsilan mit dem Katalysator vermengt, und dieses Gemisch bis zum Rückfluß (ca. 66° C) erhitzt. Nach Zugabe des Siloxans wird auf 90° C erhitzt und anschließend die Carbonsäure, vorzugsweise Essigsäure zugesetzt. Die Carbonsäuren sollen weitestgehend rein sein und keine Verbindungen enthalten, die z. B. mit der SiCl- bzw. SiOAc-Gruppierung Reaktionen eingehen können. Die Temperatur wird auf 120—130° C erhöht, so daß Rückfluß eintritt. Nach 2 bis 5stündigem Rühren bei dieser Temperatur wird flüchtiges Material durch Destillation befreit (z. B. bei 120° C und 20 mbar).

Der Rückstand, der je nach Qualität der eingesetzten Materialien farblos bis leicht gelblich aussehen kann, ist durch Spuren von nicht löslichem Salz minimal getrübt. Das Produkt ist eine bewegliche, stark wasserempfindliche Flüssigkeit.

Die Äquilibrierungsreaktion kommt nach der Entfernung der Carbonsäure (Destillation im Vakuum) sofort zum Stehen. Das Ausheizen niedermolekularer Anteile, wie z. B. Octamethylcyclotetrasiloxan wird somit problemlos.

Aufgrund der günstigen Reaktionsbedingungen, sowie der kurzen Reaktionszeiten, ist eine kontinuierliche Herstellung ohne weiteres möglich. Als einbasische Carbonsäure können z. B. Essigsäure, Propionsäure oder auch höhere Carbonsäuren eingesetzt werden. Bevorzugt wird jedoch Essigsäure.

Die vorliegende Erfindung wird durch die nachfolgenden Beispiele näher erläutert (%-Angaben beziehen sich — soweit nicht anders vermerkt — auf Gew.-%, D bedeutet eine difunktionelle Einheit $-OSi(R)_2$ und Ac steht für den Acetylrest). Die funktionellen Endgruppen werden in Form von mval $H^+$ pro 100 g angegeben.

## Nichterfindungsgemäße Vergleichsbeispiele

### Beispiel A

149,5 g [1 Mol] Methyltrichlorsilan werden mit 11 g Natriumsulfat vermischt und auf 70° C erhitzt. Es tritt Rückfluß ein. Bei dieser Temperatur werden 1110 g [3,75 Mol] Octamethylcyclotetrasiloxan zügig zugegeben. Anschließend wird auf 90° C erwärmt und in 30 Minuten werden 500 g [8,33 Mol] Essigsäure (100%ig) zugetropft. Es entsteht ein starker HCl-Strom. Vorsichtig wird auf ca. 125° C (Rückfluß) erhitzt und 5 Stunden bei dieser Temperatur gerührt.

Anschließend wird bis 90° C und 20 mbar ausgeheizt. Es werden 930 g flüchtiges Material entfernt. Zu erwarten waren ca. 350 g.

Es blieb ein leicht trüber Rückstand zurück (709 g).

Eine H—NMR-Analyse zeigte bei einem zu erwartenden Verhältnis von

$$SiCH_3 : CH_3\overset{\overset{O}{\|}}{C}—$$

von 10,3 : 1 ein Verhältnis von 6,5 : 1.

## Beispiel B

Nach dem in Beispiel A beschriebenen Verfahren wurden anstatt 11 g $Na_2SO_4$ die gleiche Menge $KHSO_4$ eingesetzt. Es wurden 977,5 g flüchtiges Material isoliert.

Eine H – NMR-Analyse des leicht trüben Rückstandes (691 g) zeigte ein

$$SiCH_3 : CH_3\overset{\overset{O}{\|}}{C}—\text{-Verhältnis}$$

von 6,1 : 1.

Die obigen Ergebnisse zeigen, daß Salze der Schwefelsäure nur mangelhaft äquilibrierend wirken.

## Erfindungsgemäße Beispiele

### Beispiel 1 und 2

129 g [1 Mol] Dimethyldichlorsilan werden mit 2,3 g $KO_3SC_4F_9$ vermischt und auf ca. 70° C aufgeheizt (Rückfluß). Bei dieser Temperatur werden 444 g [1,5 Mol] Octamethylcyclotetrasiloxan zügig zugegeben. Anschließend wird auf 90° C erhitzt und in 30 Minuten werden 240 g [4 Mol] Essigsäure [100%] zugetropft. Es wird zum Rückfluß erhitzt und 3 Stunden bei dieser Temperatur weitergerührt.

Anschließend wird bei 120° C und 20 mbar (Versuch 1) bzw. 90° C und 20 mbar (Versuch 2) ausgeheizt.

Es entsteht ein leicht trübes, gelblich gefärbtes Produkt, das nach einigem Stehen einen feinen Niederschlag absondert und wasserklar wird.

| | Versuch | |
|---|---|---|
| | 1 | 2 |
| Ausbeute | 555 g | 570 g |
| Destillat | 177 g | 165 g |
| mval $H^+$ pro 100 g | 285 | 285 |

Gaschromatogramm des verdampften Anteils (=vD)

| vD % | 55.3 | 55.5 |
|---|---|---|
| $D_4$ % | 1.364 | 2.50 |
| $D_5$ % | 3.83 | 4.05 |
| $D_6$ % | 1.26 | 1.13 |
| $D_7$ % | 0.24 | 0.20 |
| $AcOD_nAc$ | | |
| n = 1% | – | – |
| n = 2% | 4.3 | 5.4 |
| n = 3% | 10.9 | 9.8 |
| n = 4% | 12.5 | 10.8 |
| n = 5% | 11.7 | 10.4 |
| n = 6% | 10.4 | 9.3 |
| n = 7% | 8.5 | 8.1 |
| n = 8% | 7.0 | 7.0 |
| n = 9% | 5.7 | 6.0 |
| n = 10% | 4.6 | 5.2 |
| n = 11% | 3.7 | 4.3 |
| n = 12% | 3.2 | 3.6 |
| etc . . . | | |

Die in geringen Mengen vorliegenden Chlorsiloxane wurden bei der Auswertung des GC nicht berücksichtigt.

Beispiel 3

149,5 g [1 Mol] Methyltrichlorsilan werden mit 4,73 g $CF_3SO_3K$ vermischt und auf ca. 65° C (Rückfluß) erhitzt. Bei dieser Temperatur werden 1110 g [3,75 Mol] Octamethylcyclotetrasiloxan zügig zugegeben. Anschließend wird auf 90° C erhitzt und in 30 Minuten werden 500 g [8,33 Mol] Essigsäure (100%ig) zugetropft. Es entsteht ein starker HCl-Strom. Vorsichtig wird auf ca. 125° C erhitzt. Bei dieser Temperatur wird 3 Stunden nachgerührt.

Es wird bei 90° C und 15 mbar ausgeheizt.

| | |
|---|---|
| Rückstand: | 1280,4 g (leicht trüb) ≙ 96% d. Th. |
| Destillat: | 351 g |

| | |
|---|---|
| Analyse Rückstand: | |
| mval $H^+$/100 g: | 215 (th. 225,6)<br>davon entfallen 7,6 mval auf HCl |

Beispiel 4

Wird im Beispiel 3 der Katalysator $CF_3SO_3K$ durch 5,4 g $C_4F_3SO_3(C_2H_5)_4N$ ersetzt, so ergibt sich folgendes Resultat:

| | |
|---|---|
| Rückstand: | 1251,7 g ≙ 94% d. Thl. |
| Destillat: | 396 g |
| Analyse Rückstand: | |
| mval $H^+$/100 g: | 214 |
| | davon entfallen 3 mval auf HCl |

Beispiel 5

Wird im Beispiel 3 der Katalysator $CF_3SO_3K$ durch 5,05 g $C_4F_9SO_3K$ ersetzt, so ergibt sich bei Ausheiztemperaturen von 120° C und einem Druck von 20 mbar folgendes Resultat:

| | |
|---|---|
| Rückstand: | 1255 g ≙ 94% d. Th. |
| Destillat: | 344 g |
| Analyse Rückstand: | |
| mval $H^+$/100 g: | 203 |

Beispiel 6

Wird im Beispiel 3 der Katalysator $CF_3SO_3K$ durch 8,12 g $C_8F_{17}SO_3K$ ersetzt, so ergibt sich bei einer Ausheiztemperatur von 90° C und einem Druck von 17 mbar folgendes Resultat:

| | |
|---|---|
| Rückstand: | 1250 g ≙ 94% d. Th. |
| Destillat: | 392 g |
| Analyse Rückstand: | |
| mval $H^+$/100 g: | 210 |

Beispiel 7

Wird im Beispiel 3 der Katalysator $CF_3SO_3K$ durch 5 g $C_4HF_8SO_3K$ ersetzt, so ergibt sich bei einer Ausheiztemperatur von 120° C und einem Druck von 20 mbar folgendes Resultat:

| | |
|---|---|
| Rückstand: | 1225 g ≙ 92% d. Th. |
| Destillat: | 352,5 g |
| Analyse Rückstand: | |
| mval $H^+$/100 g: | 205 |

**Patentansprüche**

1. Verfahren zur Herstellung von linearen und verzweigten äquilibrierten acyloxyhaltigen Organopolysiloxanen durch Umsetzen eines Chlorsilans der Formel

$R_aR'_bSiCl_{(4-a-b)}$

oder partiellen Hydrolysaten hiervon, wobei

a = 0, 1, 2 oder 3
b = 0, 1, 2 oder 3 und
a + b höchstens 3 ist,

mit einem oder mehreren Organosiloxanen, die folgende Bausteine in gegebenenfalls wechselnder Anordnung aufweisen können

$[R_2R''-SiO_{1/2}]$ $[RR''-SiO]$ $[R''-SiO_{3/2}]$ $[SiO_2]$

wobei
R und R′ — gleich oder verschieden — Wasserstoff, ein aliphatischer, aromatischer, gesättigter oder ungesättigter, gegebenenfalls halogen- oder cyansubstituierter einwertiger Kohlenwasserstoffrest mit bis zu 12 C-Atomen ist und
R″ Chlor oder Hydroxyl ist, oder die bei R und R′ angegebene Bedeutung hat, in solchen Mengenverhältnissen, daß die Zahl aller Si—Cl-Gruppen stets die Zahl aller Si—OH-Gruppen übersteigt, durch
Reaktion in Gegenwart einer Kombination aus einem Äquilibrierungskatalysator und — bezogen auf die siliciumgebundenen Chloratome — der mindestens 1,1fachen molaren Menge an einbasischer Carbonsäure, insbesondere Essigsäure bei Temperaturen bis maximal 135°C, dadurch gekennzeichnet, daß als Äquilibrierungskatalysator ein Salz einer fluorierten Alkansulfonsäure verwendet wird.

2. Verfahren nach dem Anspruch 1, dadurch gekennzeichnet, daß als Katalysatoren Salze der Perfluoralkansulfonsäuren in Mengen von 0,05 bis 1,5 Gew.-% eingesetzt werden.

3. Verfahren nach dem Anspruch 1, dadurch gekennzeichnet, daß als Katalysator das Kaliumsalz der Octafluorbutansulfonsäure in Mengen von 0,3 bis 0,7 Gew.-% eingesetzt wird.

## Claims

1. Process for the production of linear and branched equilibrated acyloxy-containing organopolysiloxanes by reacting a chlorosilane of the formula

$R_aR'_bSiCl_{(4-a-b)}$

or partial hydrolysates thereof, wherein

a = 0, 1, 2 or 3,
b = 0, 1, 2 or 3 and
a + b is at most 3,

with one or more organosiloxanes, which can contain the following components in an optionally varying arrangement

$[R_2R''-SiO_{1/2}]$ $[RR''-SiO]$ $[R''-SiO_{3/2}]$ $[SiO_2]$

wherein
R and R′ which may be the same or different, represent hydrogen, an aliphatic, aromatic, saturated or unsaturated, optionally halogen- or cyan-substituted monovalent hydrocarbon radical having up to 12 carbon atoms and
R″ is chlorine or hydroxyl, or has the meaning given for R and R′,
in such proportions that the number of all Si—Cl-groups invariably exceeds the number of all Si—OH-groups, by carrying out the reaction in the presence of a combination of an equilibration catalyst and — based on the silicon-bound chlorine atoms — at least a 1.1-fold molar quantity of monobasic carboxylic acid, in particular acetic acid, at temperatures of up to a maximum of 135°C, characterised in that a salt of a fluorinated alkane sulphonic acid is used as the equilibration catalyst.

2. Process according to Claim 1, characterised in that salts of perfluoralkanesulphonic acids are used in quantities of 0.05 to 1.5% by weight as the catalysts.

3. Process according to Claim 1, characterised in that the potassium salt of octafluorobutane sulphonic acid is used in quantities of 0.3 to 0.7% by weight as a catalyst.

## Revendications

1. Procédé de fabrication d'organopolysiloxanes acyloxylés équilibrés, linéaires et ramifiés, par réaction d'un chlorosilane de formule:

$R_aR'_bSiCl_{(4-a-b)}$

ou de ses hydrolysats partiels, où

a = 0, 1, 2 ou 3
b = 0, 1, 2 ou 3 et
a + b fait au plus 3,

avec un ou plusieurs organosiloxanes qui peuvent présenter les éléments de construction suivants dans un ordre éventuellement modifié:

$$[R_2R''-SiO_{1/2}]\ [RR''-SiO]\ [R''-SiO_{3/2}]\ [SiO_2]$$

où R et R' — identiques ou différents — sont de l'hydrogène, un radical hydrocarboné monovalent aliphatique, aromatique, saturé ou insaturé et éventuellement halo- ou cyano-substitué ayant jusqu'à 12 atomes de carbone et

R'' est du chlore ou un hydroxyle ou bien possède la signification indiquée pour R et R', en des proportions quantitatives telles que le nombre de tous les groupes Si—Cl dépasse constamment le nombre de tous les groupes Si—OH, par réaction en présence d'une combinaison d'un catalyseur d'équilibrage et — par rapport aux atomes de chlore liés au silicium — de la quantité au moins 1,1 fois molaire d'un acide carboxylique monobasique, en particulier, d'acide acétique, à des températures allant au maximum jusqu'à 135° C, caractérisé en ce qu'en tant que catalyseur d'équilibrage on utilise un sel d'un acide alcane-sulfonique fluoré.

2. Procédé selon la revendication 1, caractérisé en ce qu'on utilise en tant que catalyseurs, des sels d'acides perfluoroalcanesulfoniques wn des quantités de 0,05 à 1,5% en poids.

3. Procédé selon la revendication 1, caractérisé en ce qu'on utilise comme catalyseur le sel de potassium de l'acide octafluorobutanesulfonique en des quantités de 0,3 à 0,7% en poids.